# EUROPÄISCHE PATENTSCHRIFT

(11) **EP 3 298 667 B1**
(45) Veröffentlichungstag und Bekanntmachung des Hinweises auf die Patenterteilung: **24.06.2020**
(21) Anmeldenummer: 15807862.6
(22) Anmeldetag: 08.12.2015
(51) Int. Cl.: H02B 1/32

(54) **ABDECKUNGSBEFESTIGUNGSSYSTEM FÜR EINEN ELEKTRISCHEN SCHALTSCHRANK SOWIE ELEKTRISCHER SCHALTSCHRANK**
COVER ATTACHMENT SYSTEM FOR AN ELECTRICAL CABINET AND ELECTRICAL CABINET
SYSTÈME DE FIXATION DE PLASTRON POUR ARMOIRE ÉLECTRIQUE ET ARMOIRE ÉLECTRIQUE

(30) Priorität: 22.05.2015 DE 102015108196
(43) Veröffentlichungstag der Anmeldung: 28.03.2018
(73) Patentinhaber: ABB Schweiz AG, 5400 Baden (CH)
(72) Erfinder: ROTH, Michael, 77880 Sasbach (DE); DIESING, Frank, 76547 Sinsheim (DE)
(74) Vertreter: Marks, Frank
(86) Internationale Anmeldenummer: PCT/EP2015/078995
(87) Internationale Veröffentlichungsnummer: WO 2016/188594

(56) Entgegenhaltungen:
- FR-A1- 2 738 409
- FR-A1- 2 779 581
- FR-A1- 2 841 055

## Beschreibung

Die Erfindung betrifft ein Abdeckungsbefestigungssystem, zum Befestigen mindestens eines Abdeckungselementes an einem elektrischen Schaltschrank , gemäß dem Oberbegriff von Anspruch 1, sowie einen demgemäßen elektrischen Schaltschrank

Schaltschränke sind seit langem aus dem Stand der Technik bekannt, wobei in diesen elektrische und/oder elektronische Komponenten angeordnet werden, welche gegenüber der Umwelt zu schützen und/oder abzuschirmen sind. Derartige Schaltschränke sind aus Rahmengestellen aufgebaut, welche Profilstäbe oder Profilstangen aufweisen, welche an den Ecken mit Eckverbindern miteinander verbunden sind. Zur Fertigstellung des Schaltschrankes werden Gehäuseteile eingesetzt. Gehäuseteile sind typischerweise zwei Seitenwände, eine Deckwand, eine Rückwand sowie eine Bodenwand. Die Frontwand ist dabei zumeist als Tür ausgebildet. Die Gehäuseteile werden bei zerlegbaren Schaltschränken mit Gehäuseeckverbindern durch wiederlösbare Verbindungen, beispielsweise Schraubenverbindungen oder Rastverbindungen, miteinander verbunden.

Aus dem Stand der Technik ist außerdem bekannt, die elektrischen und/oder elektronischen Komponenten durch eine oder mehrere Abdeckungselemente vor direktem Zugriff zu schützen. Die Abdeckungselemente dienen somit als Berührungsschutz und werden direkt vor den elektronischen Komponenten befestigt, so dass ein direkter Zugriff erst nach deren Entfernung ermöglicht ist. In dem bekannten Stand der Technik ist das Abdeckungselement fest mit den jeweiligen Gehäuseteilen des Schaltschrankes verbunden.

In nachteiliger Weise sind die Schaltschränke des Stands der Technik wenig verwindungssteif, und somit insgesamt sehr nachgiebig ausgeführt. Dieses ist insbesondere bei zerlegbaren Schaltschränken, aufgrund der verwendeten wiederlösbaren Verbindungen nachteilig. Insbesondere der vordere Bereich des Schaltschrankes, an welchem die Tür befestigt ist, deformiert sich bereits bei geringen von außen einwirkenden Kräften. Die zerlegbaren Schaltschränke des Stands der Technik verformen sich somit bereits bei vergleichsweise geringer äußerer Krafteinwirkung.

Die FR 2 841 055 A1 zeigt ein Abdeckungsbefestigungssystem, umfassend mindestens eine Profilleiste, mindestens ein Verstellmittel in Form von Schrauben der Abdeckungen, welches auf der mindestens einen Profilleiste befestigbar ist, wobei das mindestens eine Abdeckungselement mit dem mindestens einen Verstellmittel verbindbar ist, so dass ein in dem elektrischen Schaltschrank befestigtes elektrisches Modul zumindest teilweise abdeckbar ist, wobei die mindestens eine Profilleiste zumindest zwei Gehäuseeckverbinder miteinander verbindet, so dass eine steife und/oder kraftschlüssige Verbindung der Gehäuseteile des Schaltschrankes miteinander bewirkt ist.

Die FR 2 738 409 A1 zeigt ein Abdeckungsbefestigungssystem zum Befestigen mindestens eines Abdeckungselementes an einem elektrischen Schaltschrank, umfassend mindestens eine Profilleiste, mindestens ein Verstellmittel, welches auf der mindestens einen Profilleiste befestigbar ist, wobei das mindestens eine Abdeckungselement mit dem mindestens einen Verstellmittel verbindbar ist, so dass ein in dem elektrischen Schaltschrank befestigtes elektrisches Modul zumindest teilweise abdeckbar ist, wobei die mindestens eine Profilleiste zumindest zwei Gehäuseeckverbinder miteinander verbindet, so dass eine steife und/oder kraftschlüssige Verbindung der Gehäuseteile des Schaltschrankes miteinander bewirkt ist.

Ausgehend von diesem Stand der Technik ist es Aufgabe der Erfindung, ein Befestigungssystem für eine Schaltschrankabdeckung bereitzustellen, durch welches die Steifigkeit und Stabilität eines zerlegbaren Schaltschrankes verbessert und optimiert ist.

Diese Aufgabe wird gelöst durch ein Abdeckungsbefestigungssystem der eingangs genannten Art. Diese ist dadurch gekennzeichnet, dass das mindestens eine Verstellmittel dafür vorgesehen ist auf der mindestens einen Profilleiste verschiebbar befestigt zu werden, so dass das mindestens eine Abdeckungselement entlang der Profilleiste verschiebbar ist.

Das erfindungsgemäße Abdeckungsbefestigungssystem, zum Befestigen mindestens eines Abdeckungselementes an einem elektrischen Schaltschrank , insbesondere einem zerlegbaren elektrischen Schaltschrank, welcher aus mindestens drei jeweils näherungsweise senkrecht zueinander angeordneten Gehäuseteilen zusammengesetzt ist, wobei zumindest zwei der Gehäuseteile durch mindestens einen Gehäuseeckverbinder verbunden sind, umfasst dabei mindestens eine Profilleiste sowie mindestens ein an der Profilleiste anordenbares und/oder befestigbares sowie mit einem jeweiligen Abdeckungselement verbindbares Verstellmittel, so dass ein in dem elektrischen Schaltschrank angeordnetes elektrisches Modul zumindest teilweise mittels des jeweiligen Abdeckungselementes abdeckbar ist.

Weiterhin wird die gestellte Aufgabe durch einen elektrischen Schaltschrank und insbesondere einen beschädigungs- und/oder zerstörungsfrei reproduzierbar zerlegbaren elektrischen Schaltschrank gelöst, welcher aus mindestens drei jeweils näherungsweise senkrecht zueinander angeordneten Gehäuseteilen zusammengesetzt ist, wobei zumindest zwei der Gehäuseteile durch mindestens einen Gehäuseeckverbinder verbunden sind, und mindestens ein demgemäßes Abdeckungsbefestigungssystem sowie mindestens ein Abdeckungselement aufweist, welches mit dem mindestens einen Verstellmittel verbunden oder verbindbar ist, so dass ein in dem elektrischen Schaltschrank angeordnetes elektrisches Modul zumindest teilweise mittels des jeweiligen Abdeckungselementes abdeckbar ist und/oder gleichzeitig die Stabilität und Festigkeit des Schaltschrankes erhöht ist.

Die Profilleiste des erfindungsgemäßen Abdeckungsbefestigungssystems verbindet dabei zwei Gehäuseeckverbinder, wobei jeweils ein Gehäuseeckverbinder mindestens zwei Gehäuseteile des Schaltschrankes miteinander verbindet. Durch die Befestigung der Profilleiste an den Gehäuseeckverbindern ist ein zusätzliches Versteifungselement in dem Schaltschrank angeordnet, welches in vorteilhafter Weise auf den Schaltschrank wirkende Kräfte aufnimmt. Die Torsions- und Verwindungssteifigkeit des Schaltschrankes ist daher in vorteilhafter Weise insgesamt optimiert.

Die Profilleiste, welche das Abdeckungselement trägt, ist nicht direkt an die Gehäuseteile des Schaltschrankes angebunden. Die Profilleiste ist stattdessen an die zwei Gehäuseeckverbinder, welche die Gehäuseteile miteinander verbinden, angebunden, so dass die Steifigkeit des Schaltschrankes insgesamt optimiert ist.

Die jeweilige Profilleiste ist dabei in vorteilhafter Weise im vorderen Bereich, in welchem die Tür des Schaltschrankes angeordnet ist, angebracht. Durch die Anordnung der Profilleiste in dem vorderen Bereich, welcher der Rückwand abgewandt ist, wird eine Optimierung der Verwindungs- und Torsionssteifigkeit des Schaltschrankes erzielt. Durch die Befestigung des Abdeckungselementes auf der Profilleiste ist ein geschlossenes Profil zwischen dem Abdeckungselement, den Seitenwänden und der Rückwand gebildet.

Die Grundidee der Erfindung besteht darin, ein Abdeckungsbefestigungssystem bereitzustellen, welches direkt mit den Gehäuseeckverbindern verbindbar ist, so dass eine Versteifung des Schaltschrankgehäuses bewirkt ist. Das erfindungsgemäße Abdeckungsbefestigungssystem erfüllt somit in vorteilhafterweise zwei Funktionen gleichzeitig: Die Befestigung des Abdeckungselementes an dem Schaltschrank und die Versteifung des Schaltschrankes.

Das mindestens eine Verstellmittel ist dabei verschiebbar auf der mindestens einen Profilleiste befestigt, so dass das mindestens eine Abdeckungselement entlang der Profilleiste verschiebbar ist.

In vorteilhafter Weise ist das Abdeckungselement zwischen der Frontwand und den elektrischen Modulen über das Verstellmittel auf der Profilleiste verschiebbar befestigt, so dass das Abdeckungselement flexibel in unterschiedlichen Höhen in dem Schaltschrank angeordnet werden kann. Nach der Positionierung des Abdeckungselementes vor dem abzudeckenden elektrischen Modul wird dieses fest mit den jeweiligen Profilleisten verbunden. Die Steifigkeit des Schaltschrankes ist somit durch den Kraftabtrag über das gebildete geschlossene Profil weiterhin optimiert. Das geschlossene Profil wird dabei aus der Verbindung der Profilleiste mit den Gehäuseeckverbindern und des jeweiligen Gehäuseteils des Schaltschrankes gebildet.

In einer Erfindungsvariante ist das Verstellmittel klappbar ausgeführt, wobei ein daran befestigtes Abdeckungselement, insbesondere näherungsweise rechtwinklig zu der mindestens einen Profilleiste, aufklappbar ist, so dass ein zumindest teilweise abgedecktes elektrisches Modul zugänglich ist.

Das vor dem jeweiligen elektrischen Modul platzierte Abdeckungselement lässt sich somit durch Aufklappen in einfacher Art und Weise öffnen, wodurch ein direkter Zugang zu dem elektrischen Modul ermöglicht ist.

Eine vorteilhafte Variante des erfindungsgemäßen Abdeckungsbefestigungssystems besteht darin, das die mindestens eine Profilleiste ein L-Profil ist, welches einen ersten und einen zweiten Schenkel umfasst, wobei, der erste Schenkel mindestens ein Verbindungselement aufweist, welches dafür vorgesehen ist mit mindestens einem Gehäuseeckverbinder des Schaltschrankes verbunden zu werden, wobei der zweite Schenkel in äquidistanten Abständen angeordnete Rasterungselemente aufweist, welche zur Aufnahme des Verstellmittels vorgesehen sind.

Durch das Anbringen des mindestens einen Verbindungselementes an dem ersten Schenkel ist die Profilleiste in vorteilhafter Weise in einer vordefinierten Position an den Gehäuseeckverbindern des Schaltschrankes befestigbar.

Auf dem zweiten Schenkel ist das Verstellmittel verschiebbar gelagert, und durch die in äquidistanten Abständen angeordneten Rasterungselemente definiert einrastbar. Durch die äquidistant angeordneten Rasterungselemente kann das mindestens eine Verstellmittel in vordefinierten Abständen auf der Profilleiste befestigt werden, so dass die Gefahr einer Verkantung des daran befestigten Abdeckungselementes in vorteilhafter Weise verringert ist.

In einer weiteren Erfindungsvariante umfasst das Abdeckungsbefestigungssystem zusätzlich mindestens einen Adapter, welcher dafür vorgesehen ist die Profilleiste zusätzlich mit mindestens einem der Gehäusteile des Schaltschrankes zu verbinden. Der Adapter ist dabei in mindestens zwei Ausrichtungen anbindbar, wobei durch die Ausrichtung des Adapters die Profilleiste in mindestens zwei Tiefen an dem Schaltschrank anbringbar ist.

Durch das Vorsehen mindestens eines Adapters zwischen der Profilleiste und dem Gehäuseteil des Schaltschrankes lässt sich die Profilleiste des erfindungsgemäßen Abdeckungsbefestigungssystems somit auf unterschiedlich ausgeführte Schaltschränke anpassen. In vorteilhafter Weise lässt sich das erfindungsgemäße Abdeckungsbefestigungssystem ohne konstruktive Änderungen in unterschiedlichen Tiefen an verschiedenen Schaltschränken befestigen und ist somit insgesamt flexibler einsetzbar.

Entsprechend einer bevorzugten Ausführungsform ist der Schaltschrank aus mindestens vier, jeweils näherungsweise senkrecht zueinander angeordneten Gehäuseteilen zusammengesetzt, wobei jeweils zwei der Gehäuseteile durch mindestens einen Gehäuseeckverbinder verbunden sind, wobei das Abdeckungsbefestigungssystem umfasst:
▪ mindestens zwei Profilleisten;
▪ mindestens zwei Verstellmittel, wobei jeweils eines der Verstellmittel dafür vorgesehen ist auf jeweils einer der Profilleisten befestigt zu werden; wobei
▪ das mindestens eine Abdeckungselement dafür vorgesehen ist mit den mindestens zwei Verstellmitteln verbunden zu werden,
dadurch gekennzeichnet, dass
jeweils eine der Profilleisten zumindest zwei Gehäuseeckverbinder miteinander verbindet, so dass eine steife Verbindung des Schaltschrankes bewirkt ist.

Durch die Verwendung von zwei Profilleisten, welche auf jeweils gegenüberliegenden Seiten des Schaltschrankes an den Gehäuseeckverbindern angebracht sind, ist die Steifigkeit des Schaltschrankes in vorteilhafter Weise weiter erhöht. Durch die Verwendung von zwei Verstellmitteln, wobei jeweils ein Verstellmittel auf einer der Profilleisten verschiebbar befestigt ist, ist ein daran befestigtes Abdeckungselement in vorteilhafter Weise auf zwei Profilleisten parallel verschiebbar. Die Gefahr der Verkantung des Abdeckungselementes ist somit in vorteilhafter Weise verringert.

In einer weiteren Ausführungsform ist das Abdeckungselement an insgesamt vier Verstellmitteln befestigt, wobei jeweils zwei Verstellmittel an einer Profilleiste befestigt sind, wodurch eine Vierpunktlagerung des Abdeckungselementes bewirkt ist, wodurch die Gefahr der Verkantung des Abdeckungselementes beim Verschieben insgesamt zusätzlich verringert ist.

Entsprechend einer vorteilhaften Ausführungsform weist ein Schaltschrank ein erfindungsgemäßes Abdeckungsbefestigungssystem auf, wobei zumindest zwei Gehäuseeckverbinder durch mindestens eine Profilleiste miteinander verbunden sind, so dass eine steife Verbindung des Schaltschrankes bewirkt ist.

Die Vorteile dieser Ausführungsform sind den Ausführungen zu dem unabhängigen Anspruch und den abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

In der Zeichnung zeigt:
- Fig. 1:: ein exemplarisches erstes Abdeckungsbefestigungssystem in Querschnittsansicht,
- Fig. 2:: ein exemplarisches zweites Abdeckungsbefestigungssystem in Draufsicht,
- Fig. 3:: eine exemplarische Profilleiste aus der Innenansicht eines Schaltschrankes und
- Fig. 4:: zwei exemplarische Adapter in unterschiedlichen Ausrichtungen, welche an der Innenseite eines Schaltschrankes befestigt sind.

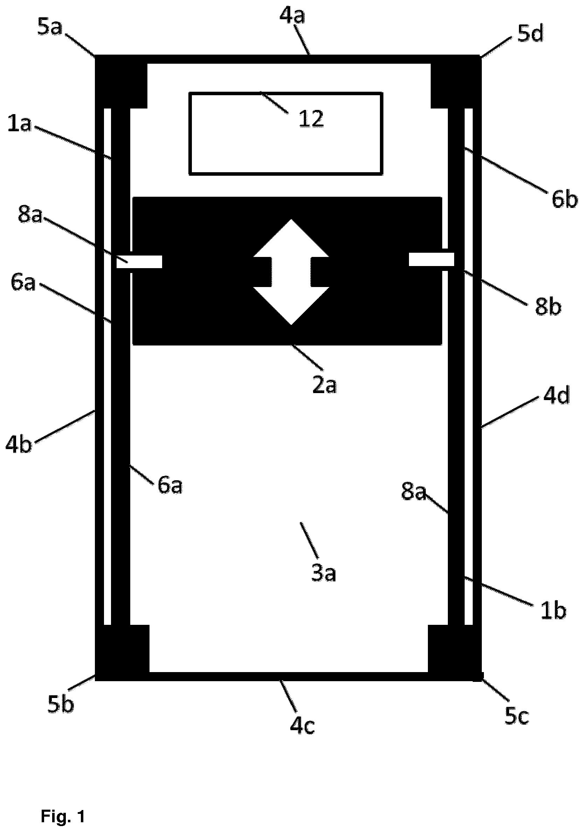

Fig. 1 zeigt ein exemplarisches erstes Abdeckungsbefestigungssystem 1a in Querschnittsansicht. Ein elektrisches Modul 12 ist dabei beispielhaft in einem Schaltschrank 3a befestigt, wobei dieses beispielweise ein Leistungsmodul oder eine elektrische Schalttafel sein kann. Der Schaltschrank 3a ist aus vier Gehäuseteilen 4a-4d zusammengesetzt, welche das Schaltschrankgehäuse bilden. Die Gehäuseteile 4a-4d sind jeweils durch Gehäuseeckverbinder 5a-5d an ihren jeweiligen Ecken miteinander verbunden. Beispielhaft bildet das Gehäuseteil 4a die Dachwand. Die Gehäuseteile 4b und 4d bilden beispielhaft die Seitenwände und das Gehäuseteil 4c bildet die Bodenwand des Schaltschrankgehäuses.

Das beispielhaft dargestellte Abdeckungsbefestigungssystem 1a umfasst eine Profilleiste 6a, welche zwei Gehäuseeckverbinder 5a, 5b miteinander verbindet und eine weitere Profilleiste 6b, welche zwei weitere Gehäuseeckverbindern 5c, 5d miteinander verbindet. An der jeweiligen Profilleiste 6a, 6b ist jeweils ein Verstellmittel 8a, 8b befestigt, wobei zwischen den beiden Verstellmitteln 8a, 8b ein Abdeckungselement 2a befestigt ist, welches dafür vorgesehen ist das elektrische Modul 12 zumindest teilweise abzudecken. Typischerweise ist das Abdeckungselement 2a eine Blech- oder eine Kunststoffabdeckung.

Der Pfeil in der Mitte des Abdeckungselementes 2a deutet an, dass dieses in beide Richtungen auf den Profilleisten bewegbar ist. Auf jeder der Profilleisten 6a, 6b ist somit ein Verstellmittel 8a, 8b verschiebbar gelagert befestigt, wobei auf den Verstellmitteln 8a, 8b wiederum das Abdeckungselement 2a befestigt ist.

In einer beispielhaften Ausführungsform können die Verstellmittel 8a, 8b auf Rollen verschiebbar auf den Profilleisten 6a, 6b gelagert sein. Eine weitere Variante besteht darin, dass die Profilleisten 6a, 6b als Gleitschienen ausgeführt sind, wobei die Verstellmittel 8a, 8b gleitbar darauf gelagert sind. In einer weiteren, nicht dargestellten, Ausführungsform können mehrere Abdeckungselemente 2a auf den Profilleisten 6a, 6b verschiebbar gelagert sein, so dass unabhängig voneinander mehrere elektrische Module 12 durch diese nebeneinander angeordneten Abdeckungselemente 2a abdeckbar sind.

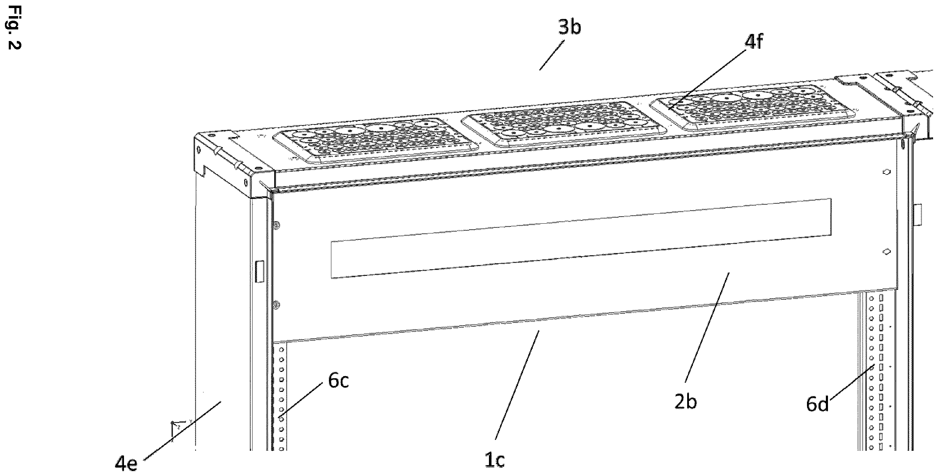

Fig. 2 zeigt ein exemplarisches zweites Abdeckungsbefestigungssystem 1c in Draufsicht. Das Abdeckungsbefestigungssystem 1c umfasst ein Abdeckungselement 2b, welches durch zwei Verstellmittel auf den Profilleisten 6c, 6d eingerastet ist. In der Figur ist ein Gehäuseteil 4e, welches beispielhaft eine linke Seitenwand ist, und ein weiteres Gehäuseteil 4f, welches beispielhaft eine Deckwand ist, dargestellt. Der Schaltschrank 3b ist an seiner rechten Seite über ein Schaltschrankverbindungselement mit einem weiteren Schaltschrank verbunden. Das Abdeckungselement 2b verdeckt zwei Verstellmittel, welche mit dem Abdeckungselement 2b beispielsweise verschraubt und/oder vernietet sind.

Die Befestigung der zu verwendenden Bauteile ist in Fig. 2 im bereits montierten Schaltschrankgehäuse mit den Bauteilen Gehäuserückwand, Gehäuseseitenteil, Gehäuseboden- und Deckblech, sowie der beiden Kunststoffeckverbinder innen und außen gezeigt. Für den Aufbau der Befestigungsmöglichkeit für Blechabdeckungen sind die Abdeckungsprofile oben/unten, die Abdeckungsprofile links/rechts und die dafür und je nach Gehäusegröße erforderliche Anzahl von Befestigungsschrauben notwendig. Die dargestellten Scharniere für Blechabdeckungen können an einem vorhandenen Lochraster der Abdeckungsprofile angeschraubt werden und dienen sowohl als Abdeckungsanschlag, wie auch als Verschluss auf der gegenüberliegenden Seite des Schaltschrankgehäuses.

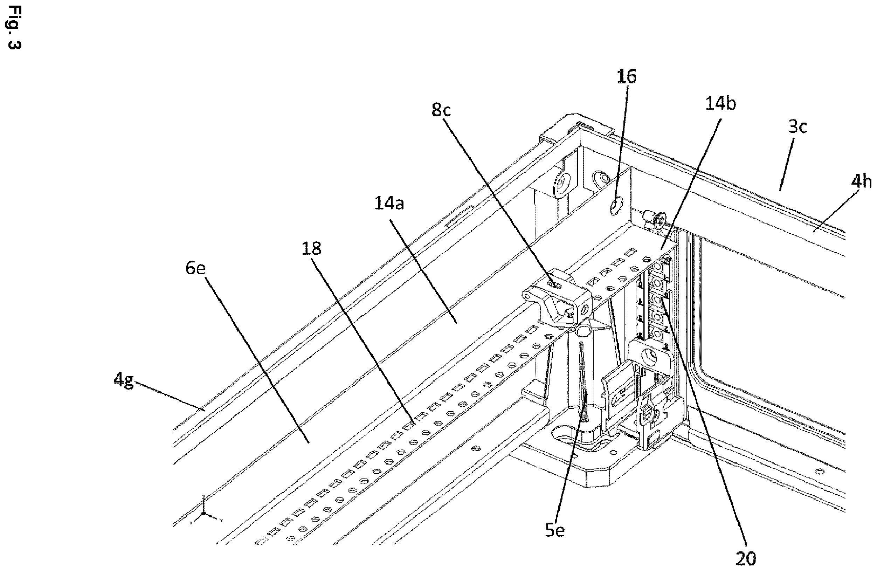

Fig. 3 zeigt eine exemplarische Profilleiste 6e aus der Innenansicht eines Schaltschrankes 3c. Die Profilleiste 6e des Schaltschrankes 3c weist beispielhaft einen ersten Schenkel 14a und einen zweiten Schenkel 14b auf. Der erste Schenkel 14a weist ein Verbindungselement 16, in diesem Fall eine eingebrachte Ausnehmung, insbesondere eine lochartige Ausnehmung, auf. Die lochartige Ausnehmung ist dafür vorgesehen die Profilleiste 6e mit einem Gehäuseeckverbinder 5e zu verbinden. Der Gehäuseeckverbinder 5e ist dabei mit den beiden Gehäuseteilen 4g, 4h verbunden und kann zusätzlich mit einer - nicht dargestellten - Rückwand verbunden sein.

In einer weiteren Ausführungsform kann das Verbindungselement 16 eine Rastvorrichtung, beispielsweise eine Rastnase oder eine Klippverbindung sein, so dass die Profilleiste in den Gehäuseeckverbinder 5e wiederlösbar eingerastet werden kann.

Auf dem zweiten Schenkel 14b sind Rasterungselemente 18 angeordnet, welche in diesem Fall in gleichen Abständen zueinander angeordnete Ausnehmungen sind, welche dafür vorgesehen sind ein Verstellmittel 8c in vordefinierten Abständen zu haltern.

Fig. 3 zeigt die oberste Position einer Profilleiste, an welcher ein Abdeckungselement befestigbar ist. Weitere Abdeckungselemente können über ein vorgegebenes Lochraster 20 in den Abdeckungsprofilen entsprechend der notwendigen Bauhöhen der Ausbaumodule mit den Scharnieren positioniert und fixiert werden.

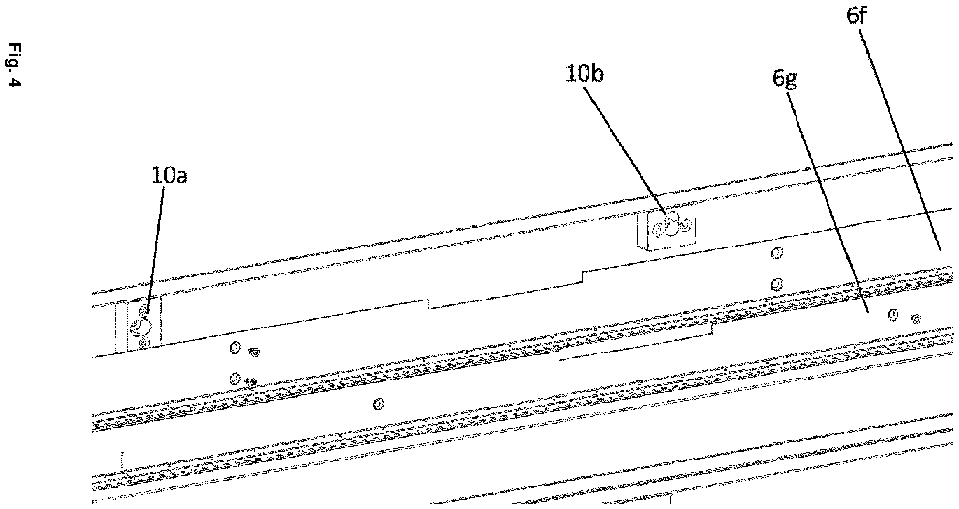

Fig. 4 zeigt zwei exemplarische Adapter 10a, 10b in unterschiedlichen Ausrichtungen, welche an der Innenseite eines Schaltschrankgehäuseteiles befestigt sind. Die Adapter 20a und 20b können konstruktionsgleich aufgebaut sein, wobei der Adapter 10a zwei Ausnehmungen aufweist, welche übereinander angeordnet sind, wobei der Adapter 10b zwei Ausnehmungen aufweist, welche hintereinander angeordnet sind. Die unterschiedliche Anordnung der jeweiligen Ausnehmungen wird beispielhaft durch die Ausrichtung der Befestigung des Adapters an dem jeweiligen Schaltschrankgehäuseteil erreicht.

Der vordere, linksseitige Adapter 10a ist dabei beispielhaft so angeordnet, dass die beiden Ausnehmungen zur Aufnahme der Schraubverbindungen übereinander angeordnet sind. Im Gegensatz dazu ist der hintere, rechtsseitige Adapter 10b so angeordnet, dass die beiden Ausnehmungen zur Aufnahme der Schraubverbindungen hintereinander angeordnet sind. In dieser beispielhaften Darstellung sind zwei Profilleisten, eine Profilleiste 6f und eine weitere Profilleiste 6g dargestellt. In Abhängigkeit der Anordnung des Adapters 10a, 10b können die Profilleisten 6f, 6g in unterschiedlichen Tiefen in dem Schaltschrank befestigt werden. Die Profilleiste 6f weist dabei zwei übereinander angeordnete Ausnehmungen auf, welche mit dem Adapter 10a verbindbar sind. Im Gegensatz dazu weist die Profilleiste 6g nur eine Ausnehmung auf, welche mit dem Adapter 10b verbindbar ist.

Die Position und Montage der für zwei unterschiedliche Schaltschrankgehäusetiefenabmessungen notwendigen Profilleisten 6f, 6g, sowie die für deren Positionierung erforderlichen Adapter 10a, 10b ist somit in der beispielhaft dargestellten Fig. 4 gezeigt. Die Adapter 10a, 10b werden auf den vorhandenen Gewindebolzen an den Gehäuseseitenteilen abgeschraubt und je nach Gehäusetiefenabmessung um 90° gedreht montiert. Die Adapterbauteile werden bei größeren Gehäusehöhenabmessungen notwendig, um die Abdeckungsprofile zusätzlich befestigen zu können und dadurch dem Schaltschrankgehäuse eine bessere Stabilität zu verleihen.

Zusammenfassend betrifft die Erfindung eine Befestigungsmöglichkeit für beispielsweise aus Blech hergestellte Abdeckungen eines elektrischen Schaltschrankes. insbesondere zum Ausbau eines zerlegbaren Schaltschrankes. Die Blechprofile sind dabei typischerweise in L-Form ausgebildet.

Die Erfindung basiert auf der Anordnung, dass Schaltschränke mit einem entsprechenden Innenausbau Abdeckungen für diverse elektrische Module beinhalten müssen, die leicht am Schaltschrankgehäuse zu montieren und auch zu demontieren sein sollten, insbesondere zur Ergänzung eines zerlegbaren Schaltschrankes.

Der Erfindung lag die Aufgabe zugrunde, für einen zerlegbaren Schaltschrank mit unterschiedlichen Tiefenabmessungen eine Befestigungsmöglichkeit für Blechabdeckungen zu entwickeln, die die Möglichkeit bietet die Blechabdeckungen von unterschiedlichen Abmessungen in Höhe und Breite über ein vorgegebenes Höhenraster im Schaltschrankgehäuse platzieren zu können. Des Weiteren ist für die Ausführung der Kombination von Schaltschrankgehäuse und Innenausbau mit erforderlichen Blechabdeckungen im Bereich der oberen und unteren Abschlussblechabdeckungen ein geeignetes und in ähnlicher Form zu montierendes Abdeckungsprofil vorzusehen, dass in erster Linie als Berührungsschutz dient, um ein Hintergreifen der montierten Blechabdeckungen zu verhindern.

Für den zerlegbaren Schaltschrank wurde, auf Basis eines vorhandenen Entwicklungskonzeptes, eine Befestigungsmöglichkeit für Blechabdeckungen entwickelt, die in Verbindung mit der konstruktiven Auslegung der zu montierenden Schaltschrankteile die Montage am Ende und auch nach Einbau der erforderlichen Bauteile des Innenausbaus möglich macht, bzw. zulässt.

Durch die Gestaltung und Befestigung der Befestigungsprofile in L-Form und der Anordnung als Rahmen befestigt jeweils oben und unten, sowie links und rechts über die vorhandenen Gehäuseeckverbinder innen kann eine zusätzliche Stabilität des Schaltschrankgehäuses erreicht werden.

## Patentansprüche

1. Abdeckungsbefestigungssystem (1a-1c), zum Befestigen mindestens eines Abdeckungselementes (2a, 2b) an einem elektrischen Schaltschrank, insbesondere einem zerlegbaren elektrischen Schaltschrank (3a-3c), welcher aus mindestens drei jeweils näherungsweise senkrecht zueinander angeordneten Gehäuseteilen (4a-4h) zusammengesetzt ist, wobei zumindest zwei der Gehäuseteile (4a-4h) durch mindestens einen Gehäuseeckverbinder (5a-5e) verbunden sind, umfassend:
▪ mindestens eine Profilleiste (6a-6g);
▪ mindestens ein Verstellmittel (8a-8c), welches auf der mindestens einen Profilleiste (6a-6g) befestigbar und/oder anordenbar ist; wobei das mindestens eine Abdeckungselement (2a, 2b) mit dem mindestens einen Verstellmittel (8a-8c) verbindbar ist, so dass ein in dem elektrischen Schaltschrank (3) befestigtes elektrisches Modul (12) zumindest teilweise abdeckbar ist,
wobei die mindestens eine Profilleiste (6a-6g) zumindest zwei Gehäuseeckverbinder (5a-5e) miteinander verbindet, so dass eine steife und/oder kraftschlüssige Verbindung der Gehäuseteile (4a-4h) des Schaltschrankes (3a-3c) miteinander bewirkt ist, **dadurch gekennzeichnet, dass** das mindestens eine Verstellmittel (8a-8c) dafür vorgesehen ist auf der mindestens einen Profilleiste (6a-6g) verschiebbar befestigt zu werden, so dass das mindestens eine Abdeckungselement (2a, 2b) entlang der Profilleiste (6a-6g) verschiebbar ist.

2. Abdeckungsbefestigungssystem (1a-1c), nach Anspruch 1, wobei das mindestens eine Verstellmittel (8a-8c) klappbar ausgeführt ist, wobei ein daran befestigtes Abdeckungselement (2a, 2b), insbesondere näherungsweise rechtwinklig zu der mindestens einen Profilleiste (6a-6g), aufklappbar ist, so dass ein zumindest teilweise abgedecktes elektrisches Modul (12) zugänglich ist.

3. Abdeckungsbefestigungssystem (1a-1c), nach einem der vorherigen Ansprüche, wobei die mindestens eine Profilleiste (6a-6g) ein L-Profil ist, welches einen ersten (14a) und einen zweiten Schenkel (14b) umfasst, wobei der erste Schenkel (14a) mindestens ein Verbindungselement (16) aufweist, welches dafür vorgesehen ist mit mindestens einem Gehäuseeckverbinder (5a-5e) des Schaltschrankes (3a-3c) verbunden zu werden, wobei der zweite Schenkel (14b) in äquidistanten Abständen angeordnete Rasterungselemente (18) aufweist, welche zur Aufnahme des Verstellmittels (8a-8c) vorgesehen sind.

4. Abdeckungsbefestigungssystem (1a-1c), nach einem der vorherigen Ansprüche, wobei dieses zusätzlich mindestens einen Adapter (10a, 10b) umfasst, welcher dafür vorgesehen ist die Profilleiste (6a-6g) zusätzlich mit mindestens einem der Gehäusteile (4a-4h) des Schaltschrankes (3a-3c) zu verbinden, wobei der Adapter (10a, 10b) in mindestens zwei Ausrichtungen verbindbar ist, wobei durch die Ausrichtung des Adapters (10a, 10b) die Profilleiste (6a-6g) in mindestens zwei Tiefen an dem Schaltschrank (3a-3c) anbringbar ist.

5. Abdeckungsbefestigungssystem (1a-1c), nach einem der vorherigen Ansprüche, wobei der Schaltschrank (3a-3c) aus mindestens vier, jeweils näherungsweise senkrecht zueinander angeordneten Gehäuseteilen (4a-4h) zusammengesetzt ist, wobei jeweils zwei der Gehäuseteile (4a-4h) durch mindestens einen Gehäuseeckverbinder (5a-5e) verbunden sind, umfassend:
▪ mindestens zwei Profilleisten (6a-6g);
▪ mindestens zwei Verstellmittel (8a-8c), wobei jeweils eines der Verstellmittel (8a-8c) dafür vorgesehen ist auf jeweils einer der Profilleisten (6a-6g) befestigt zu werden; wobei
▪ das mindestens eine Abdeckungselement (2a, 2b) dafür vorgesehen ist mit den mindestens zwei Verstellmitteln 8a-8c verbunden zu werden,
wobei jeweils eine der Profilleisten (6a-6g) zumindest zwei Gehäuseeckverbinder (5a-5e) miteinander verbindet, so dass eine steife Verbindung des Schaltschrankes (2a-2c) bewirkt ist.

6. Schaltschrank (3a-3c), der ein Abdeckungsbefestigungssystem (1a-1c) nach einem der vorherigen Ansprüche 1 bis 5 aufweist, wobei zumindest zwei Gehäuseeckverbinder (5a-5e) durch mindestens eine Profilleiste (6a-6g) miteinander verbunden sind, so dass eine steife Verbindung des Schaltschrankes (3a-3c) bewirkt ist.

## Claims

1. Cover fastening system (1a-1c) for fastening at least one cover element (2a, 2b) to an electrical switchgear cabinet, in particular to a dismantlable electrical switchgear cabinet (3a-3c), which is composed of at least three housing parts (4a-4h) which are respectively arranged approximately perpendicularly to one another, wherein at least two of the housing parts (4a-4h) are connected by at least one housing corner connector (5a-5e), comprising:
• at least one profile strip (6a-6g);
• at least one adjusting means (8a-8c) which can be fastened and/or arranged on the at least one profile strip (6a-6g); wherein the at least one cover element (2a, 2b) can be connected to the at least one adjusting means (8a-8c), so that an electrical module (12), which is fastened in the electrical switchgear cabinet (3), can be at least partially covered,
wherein the at least one profile strip (6a-6g) connects at least two housing corner connectors (5a-5e) to one another, so that a rigid and/or force-fitting connection of the housing parts (4a-4h) of the switchgear cabinet (3a-3c) to one another is created, **characterized in that** the at least one adjusting means (8a-8c) is provided for being fastened on the at least one profile strip (6a-6g) in a displaceable manner, so that the at least one cover element (2a, 2b) can be displaced along the profile strip (6a-6g) .

2. Cover fastening system (1a-1c) according to Claim 1, wherein the at least one adjusting means (8a-8c) is of foldable design, wherein a cover element (2a, 2b) which is fastened to it can be folded open, in particular approximately at a right angle to the at least one profile strip (6a-6g), so that an electrical module (12) which is at least partially covered is accessible.

3. Cover fastening system (1a-1c) according to either of the preceding claims, wherein the at least one profile strip (6a-6g) is an L-profile which comprises a first limb (14a) and a second limb (14b), wherein the first limb (14a) has at least one connecting element (16) which is provided for being connected to at least one housing corner connector (5a-5e) of the switchgear cabinet (3a-3c), wherein the second limb (14b) has latching elements (18) which are arranged at equidistant intervals and are provided for receiving the adjusting means (8a-8c).

4. Cover fastening system (la-lc) according to one of the preceding claims, wherein it additionally comprises at least one adapter (10a, 10b) which is provided for additionally connecting the profile strip (6a-6g) to at least one of the housing parts (4a-4h) of the switchgear cabinet (3a-3c), wherein the adapter (10a, 10b) can be connected in at least two orientations, wherein the profile strip (6a-6g) can be attached to the switchgear cabinet (3a-3c) in at least two depths owing to the orientation of the adapter (10a, 10b).

5. Cover fastening system (1a-1c) according to one of the preceding claims, wherein the switchgear cabinet (3a-3c) is composed of at least four housing parts (4a-4h) which are respectively arranged approximately perpendicularly in relation to one another, wherein in each case two of the housing parts (4a-4h) are connected by at least one housing corner connector (5a-5e), comprising:
• at least two profile strips (6a-6g);
• at least two adjusting means (8a-8c), wherein in each case one of the adjusting means (8a-8c) is provided for being fastened on in each case one of the profile strips (6a-6g); wherein
• the at least one cover element (2a, 2b) is provided for being connected to the at least two adjusting means (8a-8c),
wherein in each case one of the profile strips (6a-6g) connects at least two housing corner connectors (5a-5e) to one another, so that a rigid connection of the switchgear cabinet (2a-2c) is created.

6. Switchgear cabinet (3a-3c) which has a cover fastening system (1a-1c) according to one of the preceding Claims 1 to 5, wherein at least two housing corner connectors (5a-5e) are connected to one another by at least one profile strip (6a-6g), so that a rigid connection of the switchgear cabinet (3a-3c) is created.

## Revendications

1. Système de fixation de plastron (1a à 1c), destiné à fixer au moins un élément de plastron (2a, 2b) sur une armoire de distribution électrique, en particulier une armoire de distribution électrique démontable (3a à 3c) composée d'au moins trois parties de boîtier (4a à 4h) respectivement disposées de manière approximativement perpendiculaire les unes par rapport aux autres, au moins deux des parties de boîtier (4a à 4h) étant raccordées par au moins un raccord d'angle de boîtier (5a à 5e), comprenant :
- au moins une baguette profilée (6a à 6g) ;
- au moins un moyen de réglage (8a à 8c) pouvant être fixé et/ou disposé sur ladite au moins une baguette profilée (6a à 6g) ; ledit au moins un élément de plastron (2a, 2b) pouvant être relié audit au moins un moyen de réglage (8a à 8c) de sorte qu'un module électrique (12) fixé dans l'armoire de distribution électrique (3) peut être recouvert au moins en partie,
dans lequel ladite au moins une baguette profilée (6a à 6g) raccorde ensemble au moins deux raccords d'angle de boîtier (5a à 5e) de sorte qu'un raccordement rigide et/ou par adhérence des parties de boîtier (4a à 4h) de l'armoire de distribution (3a à 3c) est obtenu, **caractérisé en ce que** ledit au moins un moyen de réglage (8a à 8c) est prévu pour être fixé de manière déplaçable sur ladite au moins une baguette profilée (6a à 6g) de sorte que ledit au moins un élément de plastron (2a, 2b) peut être déplacé le long de la baguette profilée (6a à 6g).

2. Système de fixation de plastron (la à le) selon la revendication 1, dans lequel ledit au moins un moyen de réglage (8a à 8c) est réalisé de manière rabattable, un élément de plastron (2a, 2b) fixé à celui-ci, en particulier de manière approximativement perpendiculaire à ladite au moins une baguette profilée (6a à 6g), pouvant être ouvert de sorte qu'un module électrique (12) au moins partiellement recouvert est accessible.

3. Système de fixation de plastron (1a à 1c) selon l'une quelconque des revendications précédentes, dans lequel ladite au moins une baguette profilée (6a à 6g) est un profilé en L comprenant une première (14a) et une deuxième branche (14b), la première branche (14a) présentant au moins un élément de raccordement (16) qui est prévu pour être raccordé à au moins un raccord d'angle de boîtier (5a à 5e) de l'armoire de distribution (3a à 3c), la deuxième branche (14b) présentant des éléments d'encliquetage (18) disposés à intervalles équidistants et prévus pour recevoir le moyen de réglage (8a à 8c).

4. Système de fixation de plastron (1a à 1c) selon l'une quelconque des revendications précédentes, comprenant en outre au moins un adaptateur (10a, 10b) prévu pour raccorder la baguette profilée (6a à 6g) en outre à au moins l'une des parties de boîtier (4a à 4h) de l'armoire de distribution (3a à 3c), l'adaptateur (10a, 10b) pouvant être raccordé dans au moins deux orientations, l'orientation de l'adaptateur (10a, 10b) permettant d'attacher la baguette profilée (6a à 6g) à au moins deux profondeurs sur l'armoire de distribution (3a à 3c).

5. Système de fixation de plastron (1a à 1e) selon l'une quelconque des revendications précédentes, l'armoire de distribution (3a à 3c) étant composée d'au moins quatre parties de boîtier (4a à 4h) respectivement disposées de manière approximativement perpendiculaire les unes par rapport aux autres, respectivement deux des parties de boîtier (4a à 4h) étant raccordées par au moins un raccord d'angle de boîtier (5a à 5e), comprenant :
- au moins deux baguettes profilées (6a à 6g) ;
- au moins deux moyens de réglage (8a à 8c), respectivement l'un des moyens de réglage (8a à 8c) étant prévu pour être fixé sur respectivement l'une des baguettes profilées (6a à 6g) ; dans lequel
- ledit au moins un élément de plastron (2a, 2b) est prévu pour être raccordé auxdits au moins deux moyens de réglage (8a à 8c),
dans lequel respectivement l'une des baguettes profilées (6a à 6g) raccorde au moins deux raccords d'angle de boîtier (5a à 5e) l'un à l'autre de sorte qu'un raccordement rigide de l'armoire de distribution (2a à 2c) est obtenu.

6. Armoire de distribution (3a à 3c), présentant un système de fixation de plastron (1a à 1e) selon l'une quelconque des revendications précédentes 1 à 5, dans laquelle au moins deux raccords d'angle de boîtier (5a à 5e) sont raccordés ensemble par au moins une baguette profilée (6a à 6g) de sorte qu'un raccordement rigide de l'armoire de distribution (3a à 3c) est obtenu.
